# EUROPEAN PATENT APPLICATION

(11) **EP 1 959 270 A1**
(43) Date of publication of application: **20.08.2008**
(21) Application number: 07270011.5
(22) Date of filing: 15.02.2007
(51) Int. Cl.: G01S 13/90

(54) **Improved synthetic aperture radar technique**

(71) Applicant: Selex Sensors and Airborne Systems Limited, Basildon Essex SS14 3EL (GB)
(72) Inventor: Hutchinson, Trevor, Dr., Edinburgh EH14 2LN (GB); Lowe, Michael, Edinburgh EH4 1AT (GB)
(74) Representative: Wojcik, Lucy Eleanor

(57) **Abstract**

The present invention relates to an improved interferometric synthetic aperture radar technique. More specifically, the present invention relates to an interleaved bi-static interferometric synthetic aperture radar technique. The present invention provides a method and apparatus for determining height information for an imaged area comprising the steps of: transmitting a radar pulse at regular intervals alternately between two sets of radar apparatus, each said radar apparatus being provided on platforms separated by a known distance and moving in substantially the same direction at substantially similar speeds; receiving reflected pulse energy at both said sets of radar apparatus; and processing the reflected pulse energy at both said sets of radar apparatus to generate height information for the imaged area.

## Description

The present invention relates to an improved interferometric synthetic aperture radar technique. More specifically, the present invention relates to an interleaved bi-static interferometric synthetic aperture radar technique.

Interferometric synthetic aperture radar (henceforth referred to as InSAR) is used for extracting height information from an imaged area A of interest. The height extraction technique requires two complex synthetic aperture radar (henceforth referred to as SAR) images of the same area of interest A to be obtained from two receiving radar sensors that are separated by a vertical displacement.

There are three basic schemes that provide for a vertical displacement H to enable collection of the appropriate images required for processing: by using a single platform 12 on which two receiving antennas 14, 16 are mounted with a vertical displacement (termed "single platform, single pass") as shown in Figure 1; by using a single platform 22 fitted with a single antenna 24 that makes multiple passes at different altitudes (termed "single platform, two pass") as shown in Figure 2; or by using two different platforms 34', 34" at different altitudes operating simultaneously and in co-operation (termed "bi-static") as shown in Figure 3.

A complex SAR map consists of a set of complex numbers characterising the complex reflectivity of portion of the earth's surface. Each complex number represents the result of an integral over the complex reflectivity of a portion of the earth's surface multiplied by a complex weighting function (the latter depends of the characteristics of the radar, the associated signal processing and the geometry). This complex weighting function is significant over an area centred at the nominal centre position of the resolution cell and the area over which it is non trivial defines the resolution of the SAR system. A set of these complex numbers provides coverage of a portion of the Earth's surface.

In InSAR, as far as possible, two high resolution maps are provided with range resolution cells characterised by the same complex weighting function. In addition to this there will, in general, be a factor characterising the different gains and a phase responses of the two separate receive systems. Finally there will be a phase factor for each system dependant on the two way path length from the transmit antenna to the receive antenna via the centre of the given resolution cell.

In performing interferometrics, combinations of resolution cells (typically two from each complex map) are taken in order to cancel out dependence on the phase and gain factors of the receive systems and the complex reflectivity of the surface. The net result is a measure (albeit ambiguous) of the path length differences from the transmitter to each of the (classically) two vertically separated antennae via the scatterer located at the resolution cell centre. The difference in phase, caused by the slight difference in path length at the different antennae, provides a measure of the angle of arrival of the signal.

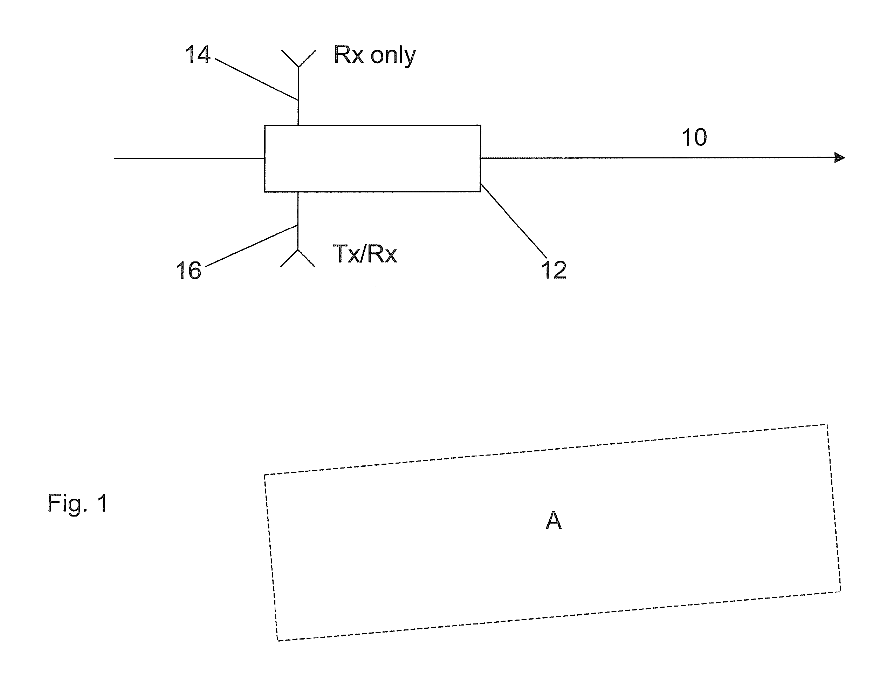

Each of the aforementioned collection schemes will now be described in more detail:
The "single platform, single pass" scheme shown in Figure 1 involves a single platform 12, usually an aircraft, equipped with a radar apparatus fitted with two vertically separated antennas 14, 16. One antenna 16 provides both transmit and receive functions, allowing collection of a monostatic SAR image. The second antenna 14 provides only a receive function, collecting data from a vertically separated position relative to the first antenna 16. This allows two SAR images to be obtained in a single pass of the area A to be imaged.

This aforementioned scheme has the advantages associated with using a single radar apparatus: common control; timing; and coherence, as well as being able to image the area of interest in a single pass.

A disadvantage of the aforementioned scheme, however, is that the vertical separation between the two antennas is constrained to the dimensions of the imaging platform. This constraint results in a relatively large height ambiguity and limits the accuracy of measurement of the angle of arrival of the signals from the scene and, thus, the accuracy of the height measurement that can be achieved.

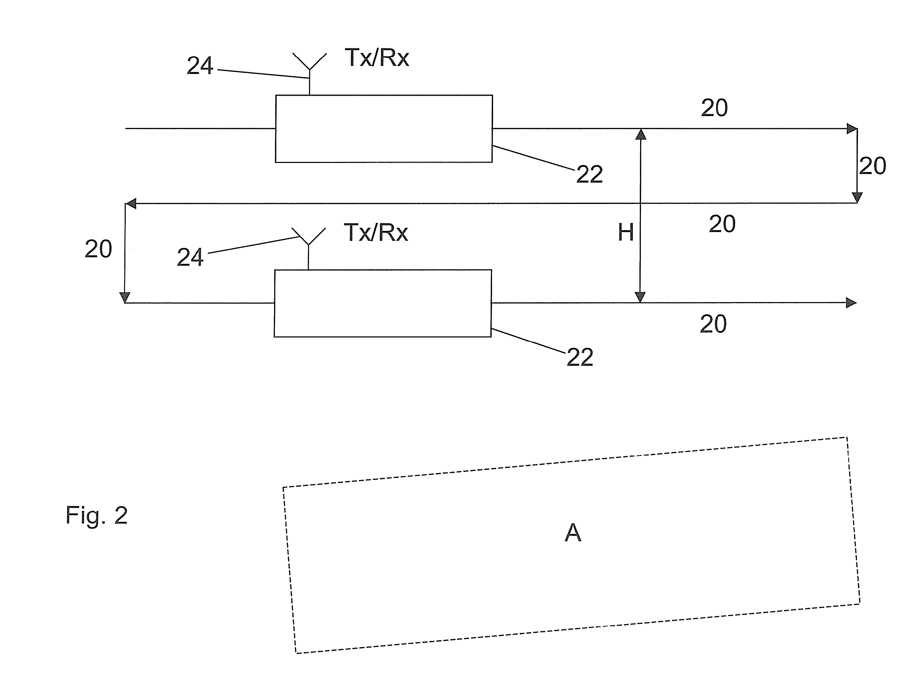

The "single platform, two pass" scheme shown in Figure 2 again involves a single platform 24 (as with the aforementioned scheme) but instead equipped with a monostatic radar apparatus. Two passes of the area of interest A are made, at different altitudes, to obtain two separate images.

This second scheme allows for much larger vertical separations H compared to the single pass scheme detailed above and results in a smaller height ambiguity and, thus, a more accurate measurement can be achieved.

The two-pass method, however, is technically challenging for two reasons. Firstly, the uncorrelated nature of the error in position measurements of the antenna phase centres (measurements made by the sensor's integrated Inertial Measurement Unit (IMU) and/or Global Positioning System (GPS) navigation system) with the result that the images to be superimposed contain displacement offsets relative to each other. The resulting relative position errors (that determine the vertical difference) can be as poor as the errors in absolute position, since the present position measurements are acquired at separate time instants. Secondly, changes to the area to be imaged A may occur in the time that elapses between passes, compromising the correlations between the different complex images of the scene. A further risk associated with the method is, as there is a requirement for the platform to perform two imaging passes, visiting the same area twice may expose the platform 22 to greater risk of detection and interception.

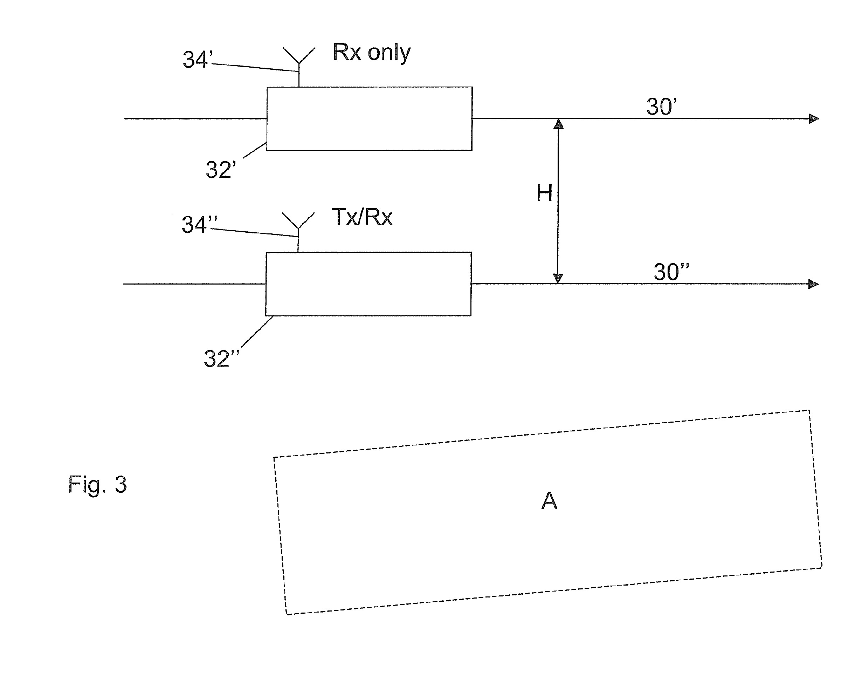

The "bi-static" scheme shown in Figure 3 involves the use of two physically separate platforms 32', 32" to implement the required transmit and receive processes - one both transmitting and receiving 32" and the other only receiving 32'. The platforms 32', 32" operate simultaneously to collect the images of the scene of interest A. As with the two-pass method described above, greater accuracy in the measurement of the ambiguous height is achievable via the substantially larger vertical separations H possible between the two platforms 32', 32".

An important advantage of the bi-static configuration over the above-described two-pass method is that the GPS measures of present position or both platforms 32', 32" (used in the sensors' integrated navigation systems) are acquired at the same instants in time. The result of this is that the position errors are highly correlated in nature and, so, tend to cancel. Further advantages are that changes to the scene A to be imaged will be minimal between the two platforms' 32', 32" near-simultaneous passes 30', 30" and exposure of the platforms 32', 32" to threats is reduced since the area A to be visited is only visited once.

A disadvantage of the bi-static scheme is the relative lack of radar phase noise cancellation, as compared to monostatic operation. This can result in a degradation of the accuracy of the height measurement. Further, unknown differences in the transfer function of the physically separate bi-static transmit/receive systems creates difficulties when performing validity checks on the height measurements. This is important because there is a high possibility that many of the resolution cells in the SAR interferogram may contain a mixture of signals from scatterers at different heights - this "contamination" will be particularly prevalent in urban and semi-urban environments. Validity checks are a means of rejecting these "contaminated", hence potentially misleading, height measurements. The traditional validity check would consist of verifying that a signal in each resolution cell has the same magnitude. If the signal does not come from a single scatterer at a given height, but rather multiple scatterers, then the associated signals will "beat" together differently and result in a different magnitude of signal at each phase centre. Differences in gain of either antenna and receive system must be allowed for in this comparison. Because there may be variations in gain of the receive systems due to environmental factors, such as temperature, this generally entails some form of calibration procedure, which in turn implies the injection of a known test signal into both receive systems. The difficulties involved in this are apparent when one considers a system with the receivers on two distinct platforms 32', 32".

Accordingly, the present invention provides a method for determining height information for an imaged area comprising the steps of: transmitting a radar pulse at regular intervals alternately between two sets of radar apparatus, each said radar apparatus being provided on platforms separated by a known distance and moving in substantially the same direction at substantially similar speeds; receiving reflected pulse energy at both said sets of radar apparatus; and processing the reflected pulse energy at both said sets of radar apparatus to generate height information for the imaged area.

Further, the present invention provides an apparatus for determining height information for an imaged area comprising: at least two platforms comprising a radar apparatus, the platforms being separated by a known distance and moving in substantially the same direction at substantially similar speeds, wherein each said radar apparatus is operable to transmit a radar pulse at regular intervals alternately with the other said radar apparatus and both said radar apparatus are operable to receive reflected pulse energy; and processing means operable to process the received reflected pulse energy to generate height information for the imaged area.

This solution both enables the monostatic phase noise cancellation to occur as well as enabling a validity check, aimed at detecting that a given resolution cell contains a mixture of signals emanating from scatterers at different heights, to become possible without a calibration function which measures the transfer function of the transmit and receive systems. The solution also retains the accuracy of measurement of platform separation associated with bi-static operation because it depends on simultaneous measurement.

Specific embodiments of the invention will now be described, by way of example only and with reference to the accompanying drawings that have like reference numerals, wherein:-
Figure 1 is a diagram illustrating a "single platform, single pass" scheme for SAR imaging;
Figure 2 is a diagram illustrating a "single platform, two pass" scheme for SAR imaging;
Figure 3 is a diagram illustrating a "bi-static" scheme for SAR imaging;

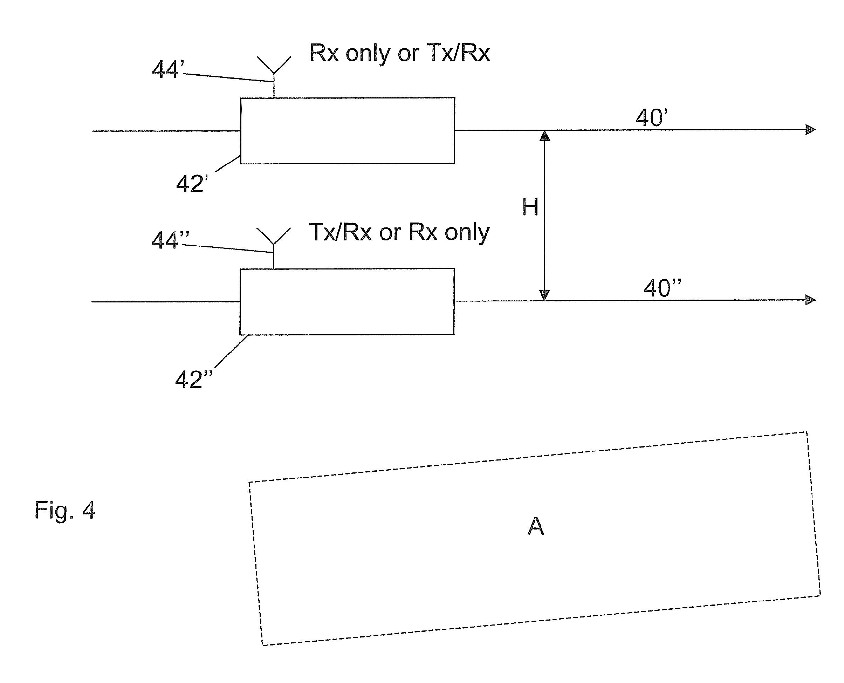

Figure 4 is a diagram illustrating a method and apparatus for SAR imaging according to a specific embodiment of the present invention;
A specific embodiment of the invention will now be described in relation to Figure 4.

In its simplest form, the general technique underlying the present invention utilises two platforms 42', 42" configured to carry out interferometric SAR. Both platforms 42', 42" are capable of transmission and reception. Both transmit an interleaved series of pulses at regular intervals.

On the first pulse, the first platform 42' will transmit and both platforms 42', 42" will receive reflected energy from the area A to be imaged. On the second pulse, the second platform 42" will transmit and, again, both platforms 42', 42" will receive reflected energy from the area A to be imaged. This sequence is repeated as both platforms 42', 42" move along the course 40', 40" necessary to construct their respective SAR images of the area A to be imaged.

It should be noted that this interleaving, on a pulse-by-pulse basis, would be necessary even if both platforms were attempting to produce monostatic complex images simultaneously. This is because if both platforms transmit and receive in an uncoordinated way, there is a real danger that the transmissions from one platform will interfere with the reception of reflected energy by the other platform.

The collected data is processed in order to produce four complex SAR images of the scene. These are then combined to form six interferograms. When examining the six interferograms produced using this method, there are several advantages. The height separation H of the two platforms can be adjusted in order to achieve the optimum trade off between accuracy of height measurement and ambiguity resolution. A level of phase noise cancellation characteristic of monostatic operation can be achieved, hence the results would have enhanced height measurement accuracy. A validity check, used in order to detect overlay of two scatterers at distinct heights, can be carried out without the use of calibration activity. The use of interferograms with one-way (bi-static) and two-way (monostatic) height separation means that the accuracy associated with a certain height separation can be combined with the ambiguity resolution problems associated with half that separation.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of determining height information for an imaged area comprising the steps of:
transmitting a radar pulse at regular intervals alternately between two sets of radar apparatus, each said radar apparatus being provided on platforms separated by a known distance and moving in substantially the same direction at substantially similar speeds;
receiving reflected pulse energy at both said sets of radar apparatus; and
processing the reflected pulse energy at both said sets of radar apparatus to generate height information for the imaged area.

2. A method according to claim 1, wherein the step of processing the reflected pulse energy produces four complex SAR images for said imaged area.

3. A method according to claim 2, wherein said four complex SAR images are then combined to form six interferograms

4. An apparatus for determining height information for an imaged area comprising:
at least two platforms comprising a radar apparatus, the platforms being separated by a known distance and moving in substantially the same direction at substantially similar speeds, wherein each said radar apparatus is operable to transmit a radar pulse at regular intervals alternately with the other said radar apparatus and both said radar apparatus are operable to receive reflected pulse energy; and
processing means operable to process the received reflected pulse energy to generate height information for the imaged area.

5. An apparatus according to claim 4, wherein the step of processing the reflected pulse energy produces four complex SAR images for said imaged area.

6. An apparatus according to claim 5, wherein said four complex SAR images are then combined to form six interferograms.

7. A method substantially as hereinbefore described with reference to Figure 4.

8. An apparatus substantially as hereinbefore described with reference to Figure 4.
